# EUROPEAN PATENT SPECIFICATION

(11) **EP 3 306 718 B1**
(45) Date of publication and mention of the grant of the patent: **25.11.2020**
(21) Application number: 16799588.5
(22) Date of filing: 26.05.2016
(51) Int. Cl.: H01M 8/00, H01M 8/04, H01M 8/04225, H01M 8/04302, H02J 3/38, H02J 3/46, H01M 8/10, H01M 8/12, H01M 8/2495, H01M 8/04007, H01M 8/04223

(54) **POWER GENERATION DEVICE, POWER GENERATION SYSTEM, AND METHOD FOR CONTROLLING POWER GENERATION SYSTEM**
STROMERZEUGUNGSVORRICHTUNG, STROMERZEUGUNGSSYSTEM UND VERFAHREN ZUR STEUERUNG DES STROMERZEUGUNGSSYSTEMS
DISPOSITIF DE PRODUCTION D'ÉNERGIE, SYSTÈME DE PRODUCTION D'ÉNERGIE ET PROCÉDÉ DE COMMANDE DE SYSTÈME DE PRODUCTION D'ÉNERGIE

(30) Priority: 26.05.2015 JP 2015106710
(43) Date of publication of application: 11.04.2018
(73) Proprietor: Kyocera Corporation, Kyoto-shi, Kyoto 612-8501 (JP)
(72) Inventor: SUZUKI, Yuki, Kyoto-shi Kyoto 612-8501 (JP)
(74) Representative: SSM Sandmair
(86) International application number: PCT/JP2016/002554
(87) International publication number: WO 2016/189875

(56) References cited:
- EP-A2- 1 507 302
- JP-A- H04 262 370
- JP-A- 2004 349 093
- JP-A- 2004 349 093
- JP-A- 2011 096 600
- JP-A- 2012 018 823
- US-A1- 2005 037 249
- US-A1- 2006 228 593

## Description

### CROSS REFERENCE TO RELATED APPLICATION

This application claims priority to and the benefit of Japanese Patent Application No. 2015-106710 (filed on May 26, 2015).

### TECHNICAL FIELD

The disclosure relates to a power generation apparatus, a power generation system, and a control method for the power generation system. In particular, the disclosure relates to a power generation apparatus, such as a fuel cell, coupled to another power generation apparatus, a power generation system that includes a plurality of such power generation apparatuses, and a control method for such a power generation system.

### BACKGROUND

In recent years, studies have been made on systems which supply power generated by a plurality of distributed power sources, such as fuel cells, which serve as power generation apparatuses coupled to one another. The fuel cells of the power generation apparatuses which function as the distributed power sources described above include, for example, Polymer Electrolyte Fuel Cells (PEFC) and Solid Oxide Fuel Cells (SOFC).

Some fuel cells generate power from hydrogen and atmospheric oxygen and, as a bi-product, also generate heat which can be used as steam or hot water (i.e., a cogeneration type, abbreviated hereinafter as "CHP" type). CHP type fuel cells may enhance overall energy efficiency by effectively utilizing the heat generated from power generation.

On the other hand, some fuel cells are not configured to allow utilization of the heat generated from power generation (i.e., a monogeneration type, abbreviated hereinafter as "MG" type). In the United States, for example, introduction of MG type fuel cells has been progressing. EP 1 507 302 discloses a power generation system where heat from a first fuel cell is transferred to a second fuel cell.

### CITATION LIST

### Patent Literature

PLT 1: JP-A-2004-214169

### SUMMARY

A power generation system according to claim 1 is disclosed.

A control method of a power generation system according claim 7 is also disclosed.

### BRIEF DESCRIPTION OF THE DRAWINGS

In the accompanying drawings:
FIG. 1 is a functional block diagram schematically illustrating a power generation system according to an embodiment of the disclosure;
FIG. 2 is a flowchart illustrating an example of a process to shut down one of power generation apparatuses of the power generation system according to an embodiment of the disclosure;
FIGS. 3A to 3C are schematic diagrams illustrating example operation to shut down one of the power generation apparatuses of the power generation system according to an embodiment;
FIG. 4 is a flowchart illustrating example operation to start up one of the power generation apparatuses of the power generation system according to one embodiment; and
FIGS. 5A to 5C are schematic diagrams illustrating example operation to start up one of the power generation apparatuses of the power generation system according to an embodiment.

### DETAILED DESCRIPTION

In general, MG type fuel cells are not configured to allow utilization of heat generated from power generation. Therefore, during operation of a system which includes a plurality of fuel cells, the heat generated from the power generation by the MG type fuel cells cannot be utilized effectively. Also, heat generated from power generation by CHP type fuel cells cannot be effectively utilized unless an environment allowing appropriate use of, for example, hot water is prepared. On the other hand, a power generation apparatus, a power generation system, and a control method for the power generation system according to the disclosure may effectively utilize the heat generated from the power generation.

Hereinafter, an embodiment of the disclosure will be described with reference to the accompanying drawings.

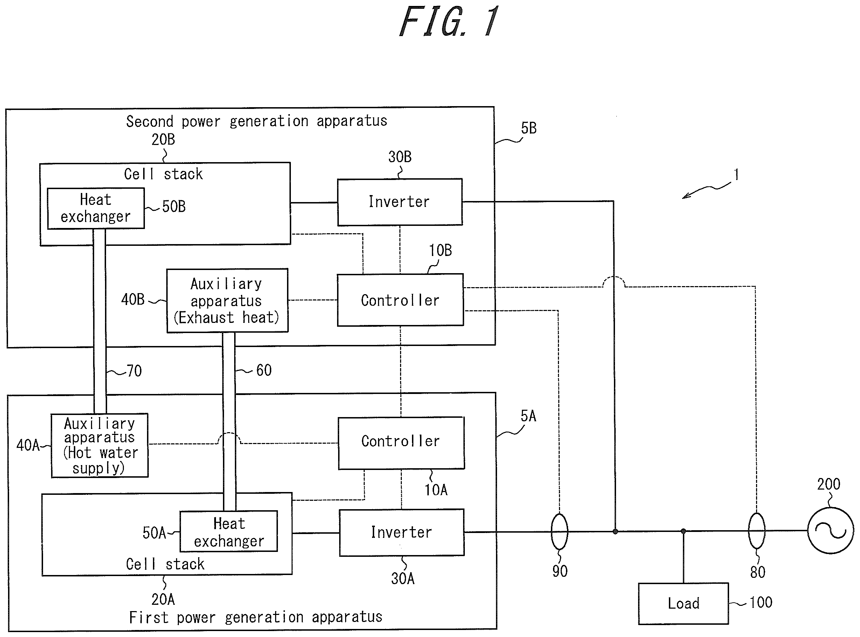

In FIG. 1, solid lines primarily indicate paths of power, and broken lines primarily indicate paths of control signals or signals for communication of various information. Hereinafter, description of conventionally well-known elements or components will be simplified or omitted as appropriate.

As illustrated in FIG. 1, a power generation system 1 according to the present embodiment includes a first power generation apparatus 5A and a second power generation apparatus 5B. According to the present embodiment, the first power generation apparatus 5A and the second power generation apparatus 5B may each be a fuel cell unit such as Solid Oxide Fuel Cell (SOFC) or Polymer Electrolyte Fuel Cell (PEFC). Hereinafter, it is assumed that the first power generation apparatus 5A and the second power generation apparatus 5B are a fuel cell unit such as Solid Oxide Fuel Cell (SOFC) and Polymer Electrolyte Fuel Cell (PEFC), but the first and second power generation apparatuses according to the present embodiment are not limited thereto.

According to the present embodiment, also, the first power generation apparatus 5A is the MG type fuel cell, and the second power generation apparatus 5B is the CHP type fuel cell. However, the first power generation apparatus 5A and the second power generation apparatus 5B according to the present embodiment are not limited thereto, and may, for example, be fuel cells of the same type.

FIG. 1 illustrates an example in which the power generation system 1 includes two power generation apparatuses, the first power generation apparatus 5A and the second power generation apparatus 5B, which serve as a plurality of distributed power sources. However, the power generation system 1 according to the present embodiment may be configured to include any plural number of distributed power sources. That is, the power generation system 1 according to the present embodiment may include, as a minimum configuration, two power generation apparatuses, the first power generation apparatus 5A and the second power generation apparatus 5B, which serve as the distributed power sources. Also, for example, the power generation system 1 may be configured to include four power generation units coupled to one another, each of which generates power of 700 W, and thus achieving an output of approximately 3 kW for the entire system. In some configurations, the power generation system 1 according to the present embodiment may include, in addition to the first power generation apparatus 5A and the second power generation apparatus 5B, any number of any distributed power sources such as fuel cells of different types, solar cells, and storage cells. Hereinafter, the power generation system 1 according to the present embodiment is described as including two power generation apparatuses, the first power generation apparatus 5A and the second power generation apparatus 5B, for convenience.

As illustrated in FIG. 1, in the power generation system 1, the outputs of the first power generation apparatus 5A and the second power generation apparatus 5B are combined together and connected to a load 100 and a power grid 200. According to this configuration, the power generation system 1 supplies power generated by the first power generation apparatus 5A and the second power generation apparatus 5B to the load 100 in conjunction with the power grid 200.

First, the first power generation apparatus 5A according to the present embodiment will be described.

As illustrated in FIG. 1, the first power generation apparatus 5A according to the present embodiment includes a controller 10A, a cell stack 20A, an inverter 30A (a power control apparatus), and an auxiliary apparatus 40A. As illustrated in FIG. 1, the first power generation apparatus 5A supplies power generated by the cell stack 20A to the load 100 via an inverter 30A. To that end, the cell stack 20A is coupled to the inverter 30A, which in turn is coupled to the load 100. The inverter 30Ais also coupled to the power grid 200 for interconnection therewith. The power grid 200 may be a conventional commercial power grid (a grid). In this way, the first power generation apparatus 5A controls the power output from the cell stack 20A and supplies the power to the load 100. The load 100 may be any apparatus including a household appliance which receives the power from the power generation system 1 when used by a user. Although in FIG. 1 the load 100 is illustrated as one appliance, the load 100 is not limited thereto but may be any number of various appliances.

The controller 10A controls and manages the first power generation apparatus 5A in its entirety, including each component thereof. In particular, according to the present embodiment, the controller 10A performs various control in respect of the cell stack 20A, the inverter 30A, and the auxiliary apparatus 40A. The controller 10 may be configured as, for example, a microcomputer or Central Processing Unit (CPU) to execute a predetermined program. Hereinafter, the controller 10A is described as including a memory configured to store various programs and information.

According to the present embodiment in particular, the controller 10A controls power generation by the cell stack 20A to, for example, activate, start up, increase output, decrease output, shut down, or stop output of the cell stack 20A. Also, the controller 10A controls the inverter 30A to step up or step down a voltage of power input to the inverter 30A. Further, the controller 10A controls the auxiliary apparatus 40A to control output of heat (exhaust heat) generated from the power generation by the cell stack 20A. The output of the exhaust heat by the auxiliary apparatus 40A will be described below.

The cell stack 20A is configured as a stack of a plurality of power generation cells made of highly heat-resistant material such as ceramic. The cell stack 20A constituting the fuel cell generates DC power from an electrochemical reaction of hydrogen and oxygen. To generate power, therefore, the cell stack 20A needs to receive a supply of gas fuel. In FIG. 1, the supply of the gas fuel to the cell stack 20A is omitted. The cell stack 20A may have a configuration similar to those of cell stacks of conventionally known fuel cells, and thus a further detailed description of the cell stack 20A will be omitted. The cell stack 20A starts power generation when the auxiliary apparatus 40A starts operating and a power generation condition is met.

The inverter 30A includes a DC/DC converter and so on and, after converting the power output from the cell stack 20A into power at an appropriate voltage by stepping up or stepping down the power, outputs the converted power from the first power generation apparatus 5A. The inverter 30A may be configured similarly to conventionally known inverters, and thus a further detailed description of the inverter 30A will be omitted.

The auxiliary apparatus 40A is equipped with elements necessary for the cell stack 20A to generate power such as a blower for supplying gas including hydrogen and oxygen, and a heater for warming the hydrogen and oxygen. Therefore, the auxiliary apparatus 40A generates heat from the power generation by the cell stack 20A.

Next, the second power generation apparatus 5B according to the present embodiment will be described.

As illustrated in FIG. 1, the second power generation apparatus 5B according to the present embodiment includes a controller 10B, a cell stack 20B, an inverter 30B (a power control apparatus), and an auxiliary apparatus 40B. Among components of the second power generation apparatus 5B, the controller 10B, the cell stack 20B, and the inverter 30B may be similar to the controller 10A, the cell stack 20A, and the inverter 30A described above, respectively. Therefore, detailed descriptions of these constituents will be omitted.

In a similar manner to the auxiliary apparatus 40A, the auxiliary apparatus 40B includes elements necessary for the cell stack 20B to generate power, such as the blower for supplying gas including hydrogen and oxygen and the heater for warming the hydrogen and oxygen.

The first power generation apparatus 5A is of the MG type. Therefore, the heat generated from the power generation by the cell stack 20A is exhausted from the auxiliary apparatus 40A. On the other hand, the second power generation apparatus 5B is of the CHP type. Therefore, the heat generated from power generation by the cell stack 20B may heat up water to be supplied by the auxiliary apparatus 40B. The auxiliary apparatus 40B includes a necessary function to achieve hot water supply utilizing the heat generated from the power generation by the cell stack 20B as described above.

The power generation system 1 according to the present embodiment may be designed to originally include both the first power generation apparatus 5A and the second power generation apparatus 5B. Alternatively, the power generation system 1 according to the present embodiment may originally include the first power generation apparatus 5A serving as a conventional fuel cell unit, and additionally provided with the second power generation apparatus 5B according to the present embodiment.

As illustrated in FIG. 1, the cell stack 20A of the first power generation apparatus 5A includes a heat exchanger 50A. The heat exchanger 50A is coupled to the auxiliary apparatus 40B of the second power generation apparatus 5B via a thermal conductor 60. The thermal conductor 60, by causing liquid or gas contained therein to function as a heat conduction medium, carries heat from one side to the other. The second power generation apparatus 5B is of the CHP type and generates hot water from the power generation by the cell stack 20B. Therefore, the thermal conductor 60 may conduct the heat from the second power generation apparatus 5B to the first power generation apparatus 5A by passing the hot water thus generated. The heat exchanger 50A transfers the heat of the heat conduction medium conducted by the thermal conductor 60 to the cell stack 20A. The heat exchanger 50A functions to transfer heat from a substance with high temperature to a substance with low temperature. The heat exchanger 50A may be configured with any heat exchanger configured to exchange heat energy between two fluids having different heat energy. The heat exchanger 50A and the thermal conductor 60 may have any configuration other than the above configurations, so long as being capable of conducting the heat from the second power generation apparatus 5B to the first power generation apparatus 5A. Note that the auxiliary apparatus 40B, based on the control performed by the controller 10B, may adjust an amount of the heat generated from the power generation by the cell stack 20B conducted to the first power generation apparatus 5A. Some of the heat generated from the power generation by the cell stack 20B that is not conducted to the first power generation apparatus 5A may be exhausted from, for example, the auxiliary apparatus 40B.

Similarly, the cell stack 20B of the second power generation apparatus 5B includes a heat exchanger 50B. The heat exchanger 50B is coupled to the auxiliary apparatus 40A of the first power generation apparatus 5A via a thermal conductor 70. The thermal conductor 70, by causing liquid or gas contained therein to function as the heat conduction medium, conducts the heat from one side to the other. The first power generation apparatus 5A is of the MG type, and thus the heat generated from the power generation by the cell stack 20A is exhausted. Therefore, the thermal conductor 70, by passing the exhaust heat therethrough, may conduct the heat from the first power generation apparatus 5A to the second power generation apparatus 5B. The heat exchanger 50B may be configured with any heat exchanger configured to exchange heat energy between two fluids having different heat energy. The heat exchanger 50B and the thermal conductor 70 may have any configuration other than the above configurations, so long as they are capable of conducting the heat from the first power generation apparatus 5A to the second power generation apparatus 5B. Note that the auxiliary apparatus 40A, based on the control performed by the controller 10A, may adjust an amount of the heat generated from the power generation by the cell stack 20A conducted to the second power generation apparatus 5B. Some of the heat generated from the power generation by the cell stack 20A that is not conducted to the second power generation apparatus 5B may be exhausted from, for example, the auxiliary apparatus 40A.

As illustrated in FIG. 1, the power generation system 1 according to the present embodiment includes current sensors 80 and 90. The current sensor 80 is configured to detect a current flowing between the power grid 200 and the load 100. The current sensor 80 is coupled to the controller 10B of the second power generation apparatus 5B and provides information indicating a detected current to the controller 10B. The current sensor 90 is configured to detect a current flowing between the inverter 30A of the first power generation apparatus 5A and the load 100. The current sensor 90 is coupled to the controller 10B of the second power generation apparatus 5B and provides information indicating a detected current to the controller 10B. The current sensors 80 and 90 may each be, for example, Current Transformers (CT) or any other element that is capable of detecting a current.

Further, as illustrated in FIG. 1, in the power generation system 1 according to the present embodiment, the controller 10A of the first power generation apparatus 5A and the controller 10B of the second power generation apparatus 5B are connected to each other in a wired or wireless manner. This connection enables cooperation between the controller 10A and the controller 10B with one serving as a master and the other serving as a slave, for example. Therefore, according to the present embodiment, for example, by instructing only one of the controller 10A and the controller 10B (e.g., the controller 10B), the entire power generation system 1, including the first power generation apparatus 5A and the second power generation apparatus 5B, can be controlled.

Next, operation of the power generation system 1 according to the present embodiment will be described.

The power generation system 1 according to the present embodiment uses a combination of fuel cells of different types such as the first power generation apparatus 5A (the MG type) and the second power generation apparatus 5B (the CHP type). According to the present embodiment, therefore, the exhaust heat generated by power generation by the first power generation apparatus 5A (the MG type), for example, is supplied to the cell stack 20B of the second power generation apparatus 5B (the CHP type). For example, the controller 10B may instruct the controller 10A to control the cell stack 20A and the auxiliary apparatus 40A to supply heat to the second power generation apparatus 5B. Alternatively, the controller 10B may instruct the controller 10A to control the cell stack 20A and the auxiliary apparatus 40A such that the second power generation apparatus 5B receives necessary heat.

According to the present embodiment, for example, exhaust heat generated from the power generation by the second power generation apparatus 5B (the CHP type) is supplied to the cell stack 20A of the first power generation apparatus 5A (the MG type). For example, the controller 10B may control the cell stack 20B and the auxiliary apparatus 40B to supply the heat to the first power generation apparatus 5A. Alternatively, the controller 10B may control the cell stack 20B and the auxiliary apparatus 40B such that the first power generation apparatus 5A receives necessary heat. In this case, the controller 10B may acquire the amount of power output by the first power generation apparatus 5A and the second power generation apparatus 5B based on the currents detected by the current sensors 80 and 90 and, on the basis of the amount of power, control the amount of heat supplied to the first power generation apparatus 5A or the second power generation apparatus 5B.

According to the present embodiment in particular, it is preferred that the heat from either one of the first power generation apparatus 5A and the second power generation apparatus 5B which is in operation is supplied to the other power generation apparatus in which the cell stack is stopped. According to this control, the power generation system 1 according to the present embodiment exchanges heat between the first power generation apparatus 5A and the second power generation apparatus 5B, thus mutually maintaining temperature of their cells. Therefore, according to the present embodiment the life of the fuel cells of both of the power generation apparatuses can be extended, and the heat generated from power generation can be effectively used. Accordingly, the present embodiment can reduce both the cost of heat generation and the amount of carbon dioxide used.

As described above, the power generation system 1 according to the present embodiment includes the first power generation apparatus 5A (e.g., the MG type) and the second power generation apparatus 5B (e.g., the CHP type). Also, the power generation system 1 is configured to be able to supply the heat generated from the power generation by one of the first power generation apparatus 5A and the second power generation apparatus 5B to the other power generation apparatus. Here, the second power generation apparatus 5B may further include the thermal conductor 60 or 70 configured to conduct the heat between the first power generation apparatus 5A and the second power generation apparatus 5B. In this case, the controller 10B may perform control to supply the heat generated from the power generation by one of the first power generation apparatus 5A and the second power generation apparatus 5B to the other power generation apparatus.

In addition, the power generation apparatus (the second power generation apparatus 5B) according to the present embodiment, together with the other power generation apparatus (the first power generation apparatus 5A) (e.g., the MG type), generates the power to be supplied to the load 100. The second power generation apparatus 5B according to the present embodiment is configured to enable the heat generated from the power generation by one of the first power generation apparatus 5A and the second power generation apparatus 5B to be supplied to the other power generation apparatus.

As described above, heat generation by CHP type fuel cells incurs cost such as by internal burning of gas, whereas the heat generated during operation of MG type fuel cells is exhausted. According to the present embodiment, however, by adding a CHP type fuel cell to an already installed MG type fuel cell, mutual exchange heat and synergy can be improved. According to the present embodiment, therefore, even in a situation where, for example, installation of MG type fuel cells has is progressing, spread of CHP type fuel cells can be expected.

Next, the operation of the power generation system 1 according to the present embodiment will be further described.

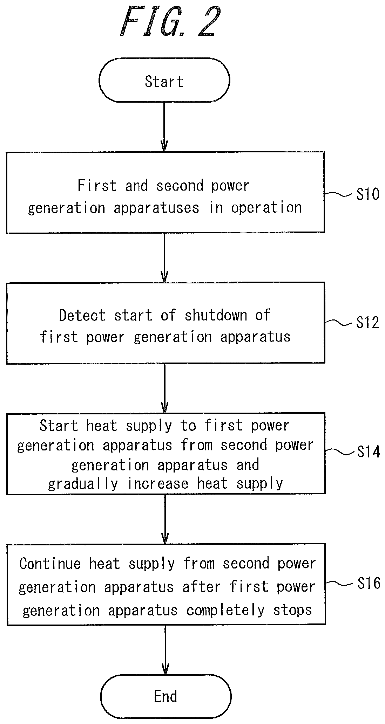

First, a process performed by the power generation system 1 to stop operation of only the first power generation apparatus 5A in a state where both the first power generation apparatus 5A and the second power generation apparatus 5B are in operation will be described. FIG. 2 is a flowchart illustrating this process.

As illustrated in FIG. 2, it is assumed that, when the power generation system 1 starts the process, the first power generation apparatus 5A and the second power generation apparatus 5B are both in operation (step S10).

When the controller 10B reduces the output of the cell stack 20A in order to stop operation of the first power generation apparatus 5A, the controller 10B detects shutdown of the first power generation apparatus 5A (step S12). For detection of the shutdown of the first power generation apparatus 5A, the controller 10B can determine that the power generated by the cell stack 20A has reduced based on, for example, the current detected by the current sensor 90.

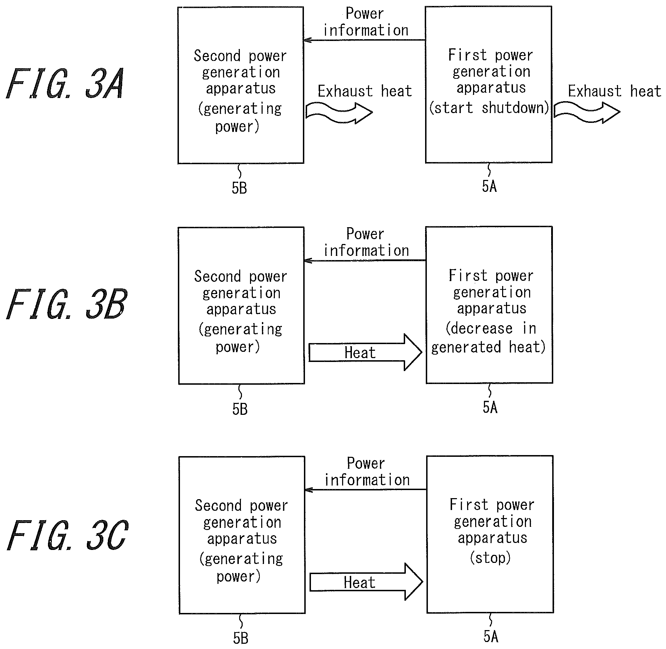

When the first power generation apparatus 5A starts the shutdown at step S12, both the first power generation apparatus 5A and the second power generation apparatus 5B have been generating the heat from their power generation as illustrated in FIG. 3A. In FIGS. 3A to 3C, the power output by the first power generation apparatus 5A, detected by the current sensor 90, and notified to the second power generation apparatus 5B is referred to as "power information". The power information enables the controller 10B to detect the shutdown of the first power generation apparatus 5A.

After the first power generation apparatus 5A starts the shutdown at step S12, the output of the first power generation apparatus 5A gradually decreases. In proportion to the decrease in the output of the first power generation apparatus 5A, the heat generated from the power generation by the cell stack 20A of the first power generation apparatus 5A also decreases. As such, the controller 10B performs control such that the second power generation apparatus 5B starts supplying heat to the first power generation apparatus 5A (step S14). Further, at step S14, as the heat generated by the cell stack 20A decreases, the controller 10B performs control to increase the amount of heat supplied to the first power generation apparatus 5A from the second power generation apparatus 5B.

At step S14, as illustrated in FIG. 3B, the heat generated by the second power generation apparatus 5B that has been exhausted is supplied to the first power generation apparatus 5A. Here, also, the controller 10B, based on the power information, recognizes the gradual decrease in the output of the first power generation apparatus 5A and performs control to increase the amount of heat supplied to the first power generation apparatus 5A from the second power generation apparatus 5B. As the output of the first power generation apparatus 5A decreases, the heat generated by the cell stack 20A itself also decreases. However, the heat received from the second power generation apparatus 5B enables the cell temperature of cells in the cell stack 20A to be maintained at a high temperature.

After the gradual decrease in the output of the first power generation apparatus 5A at step S14, the first power generation apparatus 5A stops power generation. When power generation by the first power generation apparatus 5A has stopped, heat generation from the power generation by the cell stack 20A of the first power generation apparatus 5A also stops. On the other hand, the controller 10B performs control such that, after the first power generation apparatus 5A has stopped power generation, the second power generation apparatus 5B continues to supply heat to the first power generation apparatus 5A (step S16).

At step S16, as illustrated in FIG. 3C, while the power generation by the first power generation apparatus 5A is being stopped, the heat generated by the second power generation apparatus 5B continues to be supplied to the first power generation apparatus 5A. When the power generation by the first power generation apparatus 5A stops, the heat generation by the cell stack 20A itself stops as well. However, with the heat received from the second power generation apparatus 5B, the cell temperature of the cell stack 20A may be maintained at a high temperature. Therefore, the life of the cell stack 20A of the first power generation apparatus 5A may be extended.

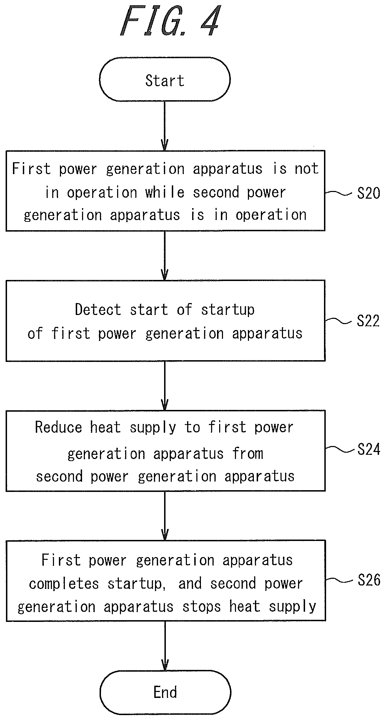

Next, a process performed by the power generation system 1 to start operation of the first power generation apparatus 5A in a state in which operation of the first power generation apparatus 5A has been stopped and the second power generation apparatus 5B is in operation will be described. FIG. 4 is a flowchart illustrating this process.

As illustrated in FIG. 4, it is assumed that, when the power generation system 1 starts the process, operation of the first power generation apparatus 5A is stopped and the second power generation apparatus 5B is in operation (step S20). Note that, although operation of the first power generation apparatus 5A is stopped, the second power generation apparatus 5B continues to supply heat to the first power generation apparatus 5A as described with reference to step S16 of FIG. 2 and FIG. 3C.

When the controller 10B activates the cell stack 20A to start operation of the first power generation apparatus 5A, the controller 10B detects startup of the first power generation apparatus 5A (step S22). For detection of the startup of the first power generation apparatus 5A, the controller 10B of the second power generation apparatus 5B monitors an amount of power generated by the second power generation apparatus 5B and an amount of power purchased by the power generation system 1 in its entirety from the power grid 200. In particular, the controller 10B, based on the currents detected by the current sensors 80 and 90, may monitor the amount of the power generated by the second power generation apparatus 5B and the amount of the power purchased by the power generation system 1 in its entirety from the power grid 200. Then, when a value obtained by reducing the amount of the power purchased by the power generation system 1 in its entirety from the power grid 200 from the amount of the power generated by the second power generation apparatus 5B exceeds a threshold for starting activation of the first power generation apparatus 5A, the controller 10B may determine that the first power generation apparatus 5A has started up. Here, the threshold for starting activation of the first power generation apparatus 5A may be set to any appropriate value.

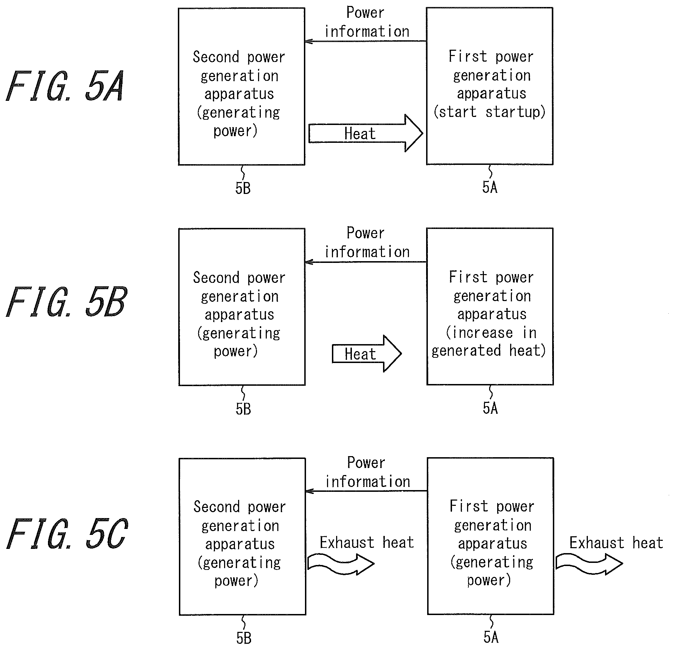

When the first power generation apparatus 5A starts the startup at step S22, the supply of heat from the second power generation apparatus 5B to the first power generation apparatus 5A is continuing, as illustrated in FIG. 5A. In FIGS. 5A to 5C, the power output by the first power generation apparatus 5A, detected by the current sensor 90, and notified to the second power generation apparatus 5B is referred to as the "power information". This power information enables the controller 10B to detect the startup of the first power generation apparatus 5A.

After the first power generation apparatus 5A starts the startup at step S22, the temperature of the cell stack 20A of the first power generation apparatus 5A rises. As such, the controller 10B performs control to reduce the amount of heat supplied to the first power generation apparatus 5A from the second power generation apparatus 5B (step S24). At step S24, also, as the temperature of the cell stack 20A rises, the controller 10B performs control to reduce the amount of heat supplied to the first power generation apparatus 5A from the second power generation apparatus 5B. At this point, the amount of the power generated by the first power generation apparatus 5A is still zero, and the first power generation apparatus 5A has not substantially started power generation.

At step S24, as illustrated in FIG. 5B, the amount of heat supplied to the first power generation apparatus 5A from the second power generation apparatus 5B is less than the amount of heat at the point illustrated in FIG. 5A.

After the amount of heat supplied to the first power generation apparatus 5A from the second power generation apparatus 5B is reduced at step S24, the temperature of the cell stack 20A gradually rises, and thus the first power generation apparatus 5A can start power generation. When the first power generation apparatus 5A starts power generation, the controller 10B performs control to stop the heat supply to the first power generation apparatus 5A from the second power generation apparatus 5B (step S26).

At step S26, as illustrated in FIG. 5C, the supply of heat to the first power generation apparatus 5A from the second power generation apparatus 5B is stopped, and the heat generated from the power generation by the second power generation apparatus 5B is exhausted. In this way, the time (e.g., startup time) necessary to start the power generation when the first power generation apparatus 5A restarts its operation may be reduced.

According to the present embodiment, as described above, at shutdown of the first power generation apparatus 5A while the second power generation apparatus 5B is generating power, the controller 10B may perform control to increase the supply of the heat generated by the second power generation apparatus 5B in accordance with the decrease in the power generated by the first power generation apparatus 5A. Also, at startup of the first power generation apparatus 5A while the second power generation apparatus 5B is generating power, the controller 10B may perform control to reduce the supply of the heat generated by the power generation apparatus 5B in accordance with the amount of power generated by the power generation apparatus 5B and the power received from the power grid 200. In this case, the controller 10B, based on the information indicating the power generated by the first power generation apparatus 5A, may control to increase or reduce the supply of heat generated by the second power generation apparatus 5B.

According to the present embodiment, as described above, the heat exhausted from one of the power generation apparatuses may be effectively utilized to heat or warm the cell stack of the other power generation apparatus.

Although the disclosure has been described based on the figures and the embodiment, it is to be understood that various modifications and changes may be implemented by those who are ordinarily skilled in the art based on the disclosure. Accordingly, such modifications and changes are included in the scope of the disclosure. For example, functions and the like included in each component, each means, or each step may be rearranged without logical inconsistency, so as to combine a plurality of components or steps together or to separate them. Also, the above embodiment does not need to be practiced strictly following the description thereof but may be implemented by appropriately combining or partially omitting its features.

It has been explained that each of the power generation apparatuses and each of the cell stacks described herein, at the start of operation, starts up and then starts power generation and, at the end of the operation, stops the power generation and then completely stops (ends) the power generation. However, in the present embodiment, such terms are not strictly limited to these meanings. For example, the "activation" of each power generation unit may correspond to what is called "startup" or the like, and the "stopping of power generation" may correspond to what is called "shutdown" or the like.

Similarly, the "start" of power generation by the apparatus and the system according to the present embodiment may mean start of a process or operation associated with power supply or start of control or processing associated with the process or the operation. Also, the "start of power generation" may be appropriately referred to as "activation". Further, the "end" of the power generation by the apparatus and the system according to the present embodiment may mean end of a process or operation, or end of control or processing related to the process or the operation. Also, such "end" may be appropriately referred to as "stop" or "completion".

Further, the present embodiment may be implemented as a method of controlling the power generation system 1 as described above. In this case, this method includes:
(1) a power generation step in which one of the first power generation apparatus 5A and the second power generation apparatus 5B generate power;
(2) a heat generation step in which heat is generated from power generation by the one of the power generation apparatuses in the power generation step; and
(3) a heat supply step in which the heat generated in the heat generation step is supplied to the other power generation apparatuses.

In the above embodiment, examples according to which the controller 10B primarily controls the power generation system 1 in its entirety have been described. However, in other embodiments the controller 10A, or the controller 10A and the controller 10B together may cooperate to perform control as described above.

The control according to the disclosure is represented by a series of operations executed by a computer system or other hardware capable of executing a program instruction. The computer system or the other hardware include, for example, a general-purpose computer, a PC (personal computer), a special purpose computer, a workstation, or other programmable data processing apparatuses. Note that in various embodiments, the various operations may be executed by a dedicated circuit implemented with a program instruction (software) (e.g., discrete logic gates interconnected to perform a specific function), or a logical block, a program module and the like executed by at least one processor. The at least one processor for executing the logical block, the program module and the like includes, for example, at least one microprocessor, CPU (Central Processing Unit), ASIC (Application Specific Integrated Circuit), DSP (Digital Signal Processor), PLD (Programmable Logic Device), FPGA (Field Programmable Gate Array), a controller, a microcontroller, an electronic apparatus, and other apparatuses designed to be capable of executing the functions described herein, and/or a combination thereof. The embodiment presented herein is implemented by, for example, hardware, software, firmware, middleware, a microcode, or any combination thereof.

### REFERENCE SIGNS LIST

- 1: power generation system
- 5A: first power generation apparatus
- 5B: second power generation apparatus
- 10A, 10B: controller
- 20A, 20B: cell stack
- 30A, 30B: inverter (power control apparatus)
- 40A, 40B: auxiliary apparatus
- 50A, 50B: heat exchanger
- 60, 70: thermal conductor
- 80, 90: current sensor
- 100: load
- 200: power grid

## Claims

1. A power generation system comprising:
a first fuel cell;
a second fuel cell; and
a controller configured to control the first fuel cell,
wherein the controller is configured to supply heat generated from power generation by the first fuel cell to the second fuel cell;
monitor the power generated by the second fuel cell; and
control the amount of heat supplied from the first fuel cell to the second fuel cell based on the amount of power generated by the second fuel cell.

2. The power generation system according to claim 1, wherein the controller is configured to increase the heat generated by the first fuel cell in accordance with a decrease in power generated by the second fuel cell, if the second fuel cell stops during power generation by the first fuel cell.

3. The power generation system according to claim 1 or 2, wherein the controller is configured to reduce the heat generated by the first fuel cell in accordance with an amount of power to be generated by the second fuel cell, if operation of the second fuel cell is started during power generation by the first fuel cell.

4. The power generation system according to claim 3, wherein the controller is configured to:
estimate heat to be generated by the second fuel cell on the basis of:
an amount of power generated by the first fuel cell and
an amount of power received from a power grid,
at the start of the operation of the second fuel cell; and
reduce supply of the heat generated by the first power generation apparatus on the basis of the estimation.

5. The power generation system according to any one of claims 1 to 4,
wherein, the first fuel cell is of a monogeneration type, and the second fuel cell is of a combined heat and power type and wherein the power generation system comprises a thermal conductor configured to conduct the heat generated by the first fuel cell to the second fuel cell by passing exhaust heat generated by the first fuel cell.

6. The power generation system according to any one of claims 1 to 4,
wherein the first fuel cell is of a combined heat and power type, and the second fuel cell is of a monogeneration type.

7. A control method for a power generation system comprising:
generating a power of a first fuel cell;
generating heat from power generation by the first fuel cell; and
supplying the heat to a second fuel cell;
monitoring the power generated by the second fuel cell; and
controlling the amount of heat supplied from the first fuel cell to the second fuel cell based on the amount of power generated by the second fuel cell.

8. The control method according to claim 7, further comprising increasing the heat generated by the first fuel cell in accordance with a decrease in power generated by the second fuel cell, if the second fuel cell stops during power generation by the first fuel cell.

9. The control method according to claim 7 or 8, further comprising reducing the heat generated by the first fuel cell in accordance with an amount of power to be generated by the second fuel cell, if operation of the second fuel cell is started during power generation by the first fuel cell.

10. The control method according to claim 9, further comprising:
estimating the heat generated by the second fuel cell on the basis of:
an amount of power generated by the first fuel cell; and
an amount of power received from a power grid,
at the start of the operation of the second fuel cell; and
reducing supply of the heat generated by the first fuel cell on the basis of the estimation.

## Patentansprüche

1. Stromerzeugungssystem, enthaltend:
eine erste Brennstoffzelle;
eine zweite Brennstoffzelle; und
eine Steuereinheit, die eingerichtet ist, die erste Brennstoffzelle zu steuern,
wobei die Steuereinrichtung eingerichtet ist, von der ersten Brennstoffzelle aus Stromerzeugung erzeugte Wärme der zweiten Brennstoffzelle zuzuführen;
den von der zweiten Brennstoffzelle erzeugten Strom zu überwachen; und
die Menge an von der ersten Brennstoffzelle der zweiten Brennstoffzelle zugeführten Wärme basierend auf der von der zweiten Brennstoffzelle erzeugten Strommenge zu steuern.

2. Stromerzeugungssystem gemäß Anspruch 1, bei dem die Steuereinrichtung eingerichtet ist, die von der ersten Brennstoffzelle entsprechend einer Abnahme des von der zweiten Brennstoffzelle erzeugten Stroms zu erhöhen, wenn die zweite Brennstoffzelle während der Stromerzeugung durch die erste Brennstoffzelle angehalten wird.

3. Stromerzeugungssystem gemäß Anspruch 1 oder 2, bei dem die Steuereinrichtung eingerichtet ist, die von der ersten Brennstoffzelle erzeugte Wärme gemäß einer von der zweiten Brennstoffzelle zu erzeugenden Strommenge zu reduzieren, wenn der Betrieb der zweiten Brennstoffzelle während der Stromerzeugung durch die erste Brennstoffzelle gestartet wird.

4. Stromerzeugungssystem gemäß Anspruch 3, bei dem die Steuereinrichtung eingerichtet ist,
von der zweiten Brennstoffzelle zu erzeugende Wärme basierend auf Folgendem zu schätzen:
einer von der ersten Brennstoffzelle erzeugten Strommenge und
einer von einem Stromnetz empfangenen Strommenge
zu Beginn des Betriebs der zweiten Brennstoffzelle; und
eine Zufuhr der von der ersten Stromerzeugungsvorrichtung erzeugten Wärme basierend auf der Abschätzung zu reduzieren.

5. Stromerzeugungssystem gemäß irgendeinem der Ansprüche 1 bis 4, bei dem die erste Brennstoffzelle vom Einzelerzeugungstyp ist und die zweite Brennstoffzelle ein kombinierter Wärme- und -strom-typ ist und bei dem das Stromerzeugungssystem einen Wärmeleiter enthält, der eingerichtet ist, die von der ersten Brennstoffzelle erzeugte Wärme zur zweiten Brennstoffzelle durch Weiterleiten von von der ersten Brennstoffzelle erzeugten Abluftwärme zu leiten.

6. Stromerzeugungssystem gemäß irgendeinem der Ansprüche 1 bis 4, bei dem die erste Brennstoffzelle von einem kombinierten Wärme-und-Strom-Typ ist und die zweite Brennstoffzelle von einem Einzelerzeugungstyp ist.

7. Steuerverfahren für ein Stromerzeugungssystem, enthaltend:
Erzeugen eines Stroms einer ersten Brennstoffzelle;
Erzeugen von Wärme aus der Stromerzeugung durch die erste Brennstoffzelle; und
Zuführen der Wärme zu einer zweiten Brennstoffzelle;
Überwachen des von der zweiten Brennstoffzelle erzeugten Stroms; und
Steuern der von der ersten Brennstoffzelle zu der zweiten Brennstoffzelle zugeführten Wärmemenge basierend auf der von der zweiten Brennstoffzelle erzeugten Strommenge.

8. Steuerverfahren gemäß Anspruch 7, ferner enthaltend ein Erhöhen der von der ersten Brennstoffzelle erzeugten Wärme gemäß einer Abnahme des von der zweiten Brennstoffzelle erzeugten Stroms, wenn die zweite Brennstoffzelle während der Stromerzeugung durch die erste Brennstoffzelle angehalten wird.

9. Steuerverfahren gemäß Anspruch 7 oder 8, ferner enthaltend ein Reduzieren der von der ersten Brennstoffzelle erzeugten Wärme gemäß einer von der zweiten Brennstoffzelle zu erzeugenden Strommenge, wenn der Betrieb der zweiten Brennstoffzelle während der Stromerzeugung durch die erste Brennstoffzelle gestartet wird.

10. Steuerverfahren gemäß Anspruch 9, ferner enthaltend:
Schätzen der von der zweiten Brennstoffzelle erzeugten Wärmemenge basierend auf:
einer von der ersten Brennstoffzelle erzeugten Strommenge; und
einer von einem Stromnetz empfangenen Strommenge,
zu Beginn des Betriebs der zweiten Brennstoffzelle; und
Reduzieren einer Zufuhr der von der ersten Brennstoffzelle erzeugten Wärme basierend auf der Schätzung.

## Revendications

1. Système de production d'énergie électrique, comprenant :
une première pile à combustible ;
une seconde pile à combustible ; et
un dispositif de commande configuré pour commander la première pile à combustible,
dans lequel le dispositif de commande est configuré pour effectuer l'alimentation en la chaleur, produite à partir de la production d'énergie électrique par la première pile à combustible, à la seconde pile à combustible ;
surveiller l'énergie électrique produite par la seconde pile à combustible ; et
commander la quantité de chaleur dont l'alimentation est effectuée, à partir de la première pile à combustible, à la seconde pile à combustible sur la base de la quantité d'énergie électrique produite par la seconde pile à combustible.

2. Système de production d'énergie électrique selon la revendication 1, dans lequel le dispositif de commande est configuré pour augmenter la chaleur produite par la première pile à combustible conformément à une diminution d'énergie électrique produite par la seconde pile à combustible, si la seconde pile à combustible s'arrête durant la production d'énergie électrique par la première pile à combustible.

3. Système de production d'énergie électrique selon la revendication 1 ou 2, dans lequel le dispositif de commande est configuré pour réduire la chaleur produite par la première pile à combustible conformément à une quantité d'énergie électrique destinée à être produite par la seconde pile à combustible, si le fonctionnement de la seconde pile à combustible est commencé durant la production d'énergie électrique par la première pile à combustible.

4. Système de production d'énergie électrique selon la revendication 3, dans lequel le dispositif de commande est configuré pour :
estimer la chaleur destinée à être produite par la seconde pile à combustible sur la base de :
une quantité d'énergie électrique produite par la première pile à combustible et
une quantité d'énergie électrique reçue à partir d'un réseau d'énergie électrique,
au début du fonctionnement de la seconde pile à combustible ; et
réduire l'alimentation en la chaleur produite par le premier appareil de production d'énergie électrique sur la base de l'estimation.

5. Système de production d'énergie électrique selon l'une quelconque des revendications 1 à 4,
dans lequel la première pile à combustible est d'un type à monoproduction, et la seconde pile à combustible est d'un type à chaleur et énergie électrique combinées et dans lequel le système de production d'énergie électrique comprend un conducteur thermique configuré pour conduire la chaleur produite par la première pile à combustible vers la seconde pile à combustible en faisant passer de la chaleur d'échappement produite par la première pile à combustible.

6. Système de production d'énergie électrique selon l'une quelconque des revendications 1 à 4,
dans lequel la première pile à combustible est d'un type à chaleur et énergie électrique combinées, et la seconde pile à combustible est d'un type à monoproduction.

7. Procédé de commande pour un système de production d'énergie électrique, comprenant :
la production d'une énergie électrique d'une première pile à combustible ;
la production d'une chaleur à partir de la production d'énergie électrique par la première pile à combustible ; et
l'alimentation en la chaleur à une seconde pile à combustible ;
la surveillance de l'énergie électrique produite par la seconde pile à combustible ; et
la commande de la quantité de chaleur dont l'alimentation est effectuée, à partir de la première pile à combustible, à la seconde pile à combustible sur la base de la quantité d'énergie électrique produite par la seconde pile à combustible.

8. Procédé de commande selon la revendication 7, comprenant en outre l'augmentation de la chaleur produite par la première pile à combustible conformément à une diminution d'énergie électrique produite par la seconde pile à combustible, si la seconde pile à combustible s'arrête durant la production d'énergie électrique par la première pile à combustible.

9. Procédé de commande selon la revendication 7 ou 8, comprenant en outre la réduction de la chaleur produite par la première pile à combustible conformément à une quantité d'énergie électrique destinée à être produite par la seconde pile à combustible, si le fonctionnement de la seconde pile à combustible est commencé durant la production d'énergie électrique par la première pile à combustible.

10. Procédé de commande selon la revendication 9, comprenant en outre :
l'estimation de la chaleur produite par la seconde pile à combustible sur la base de :
une quantité d'énergie électrique produite par la première pile à combustible ; et
une quantité d'énergie électrique reçue à partir d'un réseau d'énergie électrique,
au début du fonctionnement de la seconde pile à combustible ; et
la réduction de l'alimentation en la chaleur produite par la première pile à combustible sur la base de l'estimation.
